(19) **Europäisches Patentamt**
**European Patent Office**
**Office européen des brevets**

(11) **EP 4 424 488 A1**

(12) **EUROPEAN PATENT APPLICATION**
published in accordance with Art. 153(4) EPC

(43) Date of publication:
**04.09.2024 Bulletin 2024/36**

(21) Application number: **22886564.8**

(22) Date of filing: **28.09.2022**

(51) International Patent Classification (IPC):
*B29C 33/40* (2006.01)     *B29C 33/76* (2006.01)
*B29C 48/34* (2019.01)     *C08L 23/14* (2006.01)
*C08L 23/20* (2006.01)     *F16L 11/04* (2006.01)

(52) Cooperative Patent Classification (CPC):
**B29C 33/40; B29C 33/76; B29C 48/34;
C08L 23/14; C08L 23/20; F16L 11/04**

(86) International application number:
**PCT/JP2022/036094**

(87) International publication number:
**WO 2023/074232 (04.05.2023 Gazette 2023/18)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.10.2021 JP 2021173880**

(71) Applicant: **Mitsui Chemicals, Inc.
Tokyo 104-0028 (JP)**

(72) Inventors:
• **YASUI, Motoyasu**
  **Sodegaura-shi, Chiba 299-0265 (JP)**
• **UEKUSA, Takayuki**
  **Ichihara-shi, Chiba 299-0108 (JP)**
• **FUKAGAWA, Yoshisada**
  **Sodegaura-shi, Chiba 299-0265 (JP)**

(74) Representative: **Hoffmann Eitle
Patent- und Rechtsanwälte PartmbB
Arabellastraße 30
81925 München (DE)**

(54) **MANDREL, AND METHOD FOR PRODUCING RUBBER HOSE USING SAID MANDREL**

(57)     An object of the present invention is to provide a mandrel having flexibility while maintaining heat resistance, releasability, and recyclability that can withstand a thermal history of repeated use, which are characteristics of 4-methyl-1-pentene-based polymer, and the present invention relates to a mandrel formed of a resin composition (X) including 50 to 90 parts by mass of a 4-methyl-1-pentene- based polymer (A) satisfying specified requirements, 5 to 40 parts by mass of a propylene polymer (B), and 5 to 30 parts by mass of a 4-methyl-1-pentene·α-olefin copolymer (C) satisfying specified requirements, provided that a total of the (A), the (B), and the (C) is 100 parts by mass.

EP 4 424 488 A1

**Description**

Technical Field

The present invention relates to a mandrel formed of a resin composition including a 4-methyl-1-pentene-based polymer and a propylene polymer at a specific compounding ratio, and a method for producing a rubber hose by using the mandrel.

Background Art

Rubber hoses and high-pressure rubber hoses have been widely used in hydraulic systems for controlling civil engineering and construction machinery, industrial vehicles, machine tools, automobiles, and robots, for example. They are generally hoses having high pressure resistance and their flexibility. In particular, as the high-pressure rubber hose is in direct contact with liquid to be supplied, the rubber hose is therefore a hose comprising an inner layer of durable rubber with a fiber reinforced material inhibiting expansion and deformation, an outer layer to protect these, and wire reinforcement or other rubber layer, for example, depending on required performance.

Examples of a method for producing the high-pressure rubber hose described above includes, for example, a method for extruding an unvulcanized rubber composition around an outer circumference of a mandrel to form an inner tube of the hose. Next, a reinforcing layer such as wire is wrapped around an outer circumference of the inner tube of the hose to form an outer skin of the hose. Furthermore, the unvulcanized rubber composition is heated with high-temperature steam to vulcanize the composition at the outer circumference of the reinforcing layer. In these processes, the mandrel is responsible for supporting an inner diameter side of the hose. Finally, the rubber hose is pulled out from the mandrel by applying water pressure from an end of one side of the hose to complete production of the rubber hose.

When the rubber hose is produced in such a manner, the diameter of the mandrel determines an inner diameter of the hose. Furthermore, from the viewpoint of production cost of a rubber hose, the mandrel is required to enable repeated use. Therefore, the mandrel is particularly required to minimize dimensional change due to a thermal history of repeated use by heating and lowering in temperature a rubber hose in a vulcanization process, and required to be unlikely to undergo thermal degradation.

Moreover, as the rubber hose is produced in long length, when the rubber hose is wound onto a drum, a flexible mandrel having favorable handleability is desired.

As a mandrel material, an EPDM, a polyamide, a polyester elastomer, and a 4-methyl-1-pentene-based polymer, for example, are used.

A mandrel made of EPDM is characterized by its high rigidity. However, there is a phenomenon whereby the mandrel co-crosslinks with a hose inner tube of an unvulcanized rubber composition to adhere to the hose inner tube, making it difficult to pull out the rubber hose from the mandrel after vulcanization.

Patent Literature 1 discloses a mandrel in which a polyamide and an inorganic filler such as a glass fiber were mixed. The mandrel made of polyamide is characterized in that it has high rigidity even under elevated temperature conditions and hardly deforms under tension applied upon vulcanization of a rubber hose.

However, a polyamide is a highly water-absorbing resin. As it absorbs water by high-temperature steam upon rubber hose vulcanization, a diameter of the mandrel may be deformed, or the mandrel may have a problem of being hydrolyzed to generate voids.

Furthermore, the polyamide has high surface tension, and even though a surface roughness is modified by mixing an inorganic filler such as a glass fiber, it is difficult to pull out a rubber hose from the mandrel.

Patent Literature 2 discloses a mandrel made of polyester elastomer. The polyester elastomer has flexibility at elevated temperatures and also has excellent chemical resistance.

However, compared to EPDM and a polyamide, the mandrel made of polyester elastomer has lower rigidity, and in the case of a mandrel with a small diameter, the mandrel has a problem of causing necking deformation resulting in being stretched due to stress upon molding of a rubber hose reinforcing layer and stress derived from a vulcanization process.

Patent Literature 3 discloses a mandrel using a 4-methyl-1-pentene-based polymer. The 4-methyl-1-pentene-based polymer has a high melting point, excellent heat resistance, and releasability due to characteristics of low surface tension, and is characterized in that a rubber hose is easily pulled out from the mandrel. Furthermore, a substantial mandrel that can withstand repeated use is obtained.

However, a mandrel using the 4-methyl-1-pentene-based polymer has slightly higher rigidity, and therefore, in the case of a mandrel with a large diameter, the mandrel has a problem of being slightly poor in its handleability when the mandrel is wound on a drum upon rubber hose production, thereby requiring an improvement in materials used for the mandrel.

Citation List

Patent Literature

[Patent Literature 1] JPH8-90673A
[Patent Literature 2] JP2000-334748A
[Patent Literature 3] JPH10-100161A

Summary of Invention

Technical Problem

An object of the present invention is to provide a mandrel having flexibility while maintaining heat resistance, releasability, and recyclability that can withstand a thermal history of repeated use, which are characteristics of a 4-methyl-1-pentene-based polymer, and a method for producing a rubber hose by using the mandrel.

Solution to Problem

The present inventors have found, as a result of diligent investigations to solve the aforementioned problem, that by using a mandrel formed of a resin composition in which a 4-methyl-1-pentene-based polymer (provided that the term "polymer" used herein shall include both a homopolymer and a copolymer, unless otherwise specified), and a propylene polymer are included at a specific compounding ratio, the aforementioned problems are solved, and thus have completed the present invention.
Specific means for solving the aforementioned problems relate, for example, to the items described in [1] to [5] below.
[1] A mandrel formed of a resin composition (X), the resin composition (X) comprising 50 to 90 parts by mass of a 4-methyl-1-pentene-based (A) satisfying the following requirements (A-a) to (A-c), 5 to 40 parts by mass of a propylene polymer (B), and 5 to 30 parts by mass of a 4-methyl-1-pentene·$\alpha$-olefin copolymer (C) satisfying the following requirements (C-a) to (C-e), provided that a total of the (A), the (B), and the (C) is 100 parts by mass.

Requirement (A-a): The polymer (A) is composed of 100 to 90 mol% of a constituent unit (i) derived from 4-methyl-1-pentene and 0 to 10 mol% of a constituent unit (ii) derived from an $\alpha$-olefin having 5 to 20 carbon atoms excluding 4-methyl-1-pentene, provided that a total of the constituent unit (i) and the constituent unit (ii) is 100 mol%.
Requirement (A-b): The polymer (A) has a melting point (Tm) as measured by a differential scanning calorimeter (DSC) within a range of 200 to 250°C.
Requirement (A-c): The polymer (A) has a melt flow rate (MFR) as measured at 260°C under a load of 5.0 kg in accordance with ASTM D1238, of 1 to 100 g/10 minutes.
Requirement (C-a): The copolymer (C) is composed of 92 to 60 mol% of a constituent unit (iii) derived from 4-methyl-1-pentene and 8 to 40 mol% of a constituent unit (iv) derived from an $\alpha$-olefin having 2 to 4 carbon atoms, provided that a total of the constituent unit (iii) and the constituent unit (iv) is 100 mol%.
Requirement (C-b): The copolymer (C) has an intrinsic viscosity [$\eta$] as measured in decalin at 135°C within a range of 0.5 to 4.0 dl/g.
Requirement (C-c): The copolymer (C) has a molecular weight distribution (Mw/Mn), which is a ratio of the weight-average molecular weight (Mw) to the number-average molecular weight (Mn) as measured by gel permeation chromatography (GPC), within a range of 1.0 to 3.5.
Requirement (C-d): The copolymer (C) has a density within a range of 825 to 860 kg/m$^3$.
Requirement (C-e): The copolymer (C) has no melting point (Tm) as measured by a differential scanning calorimeter (DSC) or has a Tm within a range of lower than 160°C.
[2] The mandrel according to the item [1], wherein the resin composition (X) has a storage elastic modulus G' of dynamic viscoelasticity at 160°C measured under the conditions of a frequency of 10 rad/s (1.6 Hz), a rate of temperature rise of 2°C/min and a strain amount of 0.1%, within a range of 10 to 100 MPa.
[3] The mandrel according to the item [1], wherein the entire mandrel is formed of a single material of the resin composition (X).
[4] The mandrel according to any one of the items [1] to [3], which is for hose production.

[5] A method for producing a rubber hose, comprising:

a step of extruding the resin composition (X) according to the item [1] or [2] to obtain a mandrel, and
a step of producing a rubber hose using the mandrel obtained in the above step.

Advantageous Effect of Invention

The present invention can be suitably used as a mandrel having flexibility while maintaining heat resistance, releasability, and recyclability that can withstand a thermal history of repeated use, which are characteristics of a 4-methyl-1-pentene-based polymer.

Description of Embodiments

Specific embodiments of the present invention will be described in detail below, however, the present invention is in no way limited to the embodiments below, and may be appropriately implemented with modifications within the scope of the object of the present invention.

The mandrel according to the present invention is a mandrel molded in a continuous cylindrical shape. For the purpose of efficiently producing a rubber hose, the mandrel generally has a length of 100 m or longer and preferably 200 m or longer. The mandrel is pulled out of the long rubber hose, and then the rubber hose is cut to a desired length. Therefore, the longer the mandrel is molded, the more advantageous it is to improve productivity, because each process, such as vulcanization, can be carried out continuously.

An inner diameter of a rubber hose is also designed by a diameter of the mandrel. The diameter of the mandrel is generally 2 to 40 mm and preferably 3 to 36 mm.

Dimensional accuracy of a mandrel diameter generally requires a tolerance of less than $\pm 0.20$ mm with respect to the mandrel diameter, preferably less than $\pm 0.18$ mm, and further preferably less than $\pm 0.15$ mm.

A mandrel with a large diameter of 20 to 36 mm in diameter is used, for example, in production of high-pressure rubber hoses, which are used in hydraulic systems for controlling robots, civil engineering and construction machinery, or automobiles.

A mandrel with a small diameter of 3 to 19 mm in diameter, is used, for example, in production of brake hoses, fuel hoses, power steering hoses, or air conditioner hoses, for automobiles, and in production of wires and cables, for electrical wiring. In general industrial applications, for example, the mandrel is also used in production of steam hoses, water hoses, or air hoses.

<4-Methyl-1-pentene-based polymer (A)>

The 4-methyl-1-pentene-based polymer (A) (hereinafter may be abbreviated to as a "polymer (A)"), which is one of the components contained in the following resin composition (X) that forms the mandrel of the present invention, is a polymer that satisfies the following requirements (A-a) to (A-c).

<Requirement (A-a)>

The polymer (A) is composed of 100 to 90 mol% of a constituent unit (i) derived from 4-methyl-1-pentene and 0 to 10 mol% of a constituent unit (ii) derived from an $\alpha$-olefin having 5 to 20 carbon atoms excluding 4-methyl-1-pentene, provided that the total of the constituent unit (i) and the constituent unit (ii) is 100 mol%.

The content rate of constituent unit (i) in the polymer (A) according to the present invention being 90 mol% or more, provides thermal resistance suitable as the mandrel and an advantage of obtaining a modulus and flexibility suitable for handling.

Examples of the $\alpha$-olefin having 5 or more and 20 or less carbon atoms other than 4-methyl-1-pentene, forming the constituent unit (ii) include 1-hexene, 1-heptene, 1-octene, 1-decene, 1-tetradecene, 1-hexadecene, 1-heptadecene, 1-octadecene, and 1-eicosene, for example.

From the viewpoint of imparting a moderate modulus and flexibility to the resin composition (X) described below, the $\alpha$-olefin forming the constituent unit (ii) is preferably an $\alpha$-olefin having 8 or more and 18 or less carbon atoms (for example, 1-octene, 1-decene, 1-tetradecene, 1-hexadecene, 1-heptadecene, and 1-octadecene). These can be used singly or in combinations of two or more.

The polymer (A) according to the present invention may include other constituent unit other than the constituent unit (i) derived from 4-methyl-1-pentene and the constituent unit (ii) derived from the $\alpha$-olefin other than 4-methyl-1-pentene, to the extent that effects of the present invention are not impaired. The content rate of the other constituent unit is, for example, 0 to 10 mol%, provided that the total of the content rate of constituent unit (i) and constituent unit (ii) is 100 mol%.

The value of the content rate (mol%) of each constituent unit in the polymer (A) according to the present invention, as in the case of the copolymer (C) described below, is a value calculated by the measurement method by carbon-13 nuclear magnetic resonance (hereinafter may be referred to as $^{13}$C-NMR). A specific measurement method is as described in the contents of Examples below.

<Requirement (A-b)>

The polymer (A) according to the present invention has a melting point (Tm) as measured by a differential scanning calorimeter (DSC) within a range of 200 to 250°C, preferably 200 to 245°C, and more preferably 200 to 240°C. Within the aforementioned range of the melting point, the resin composition (X) has appropriate heat resistance.

It is to be noted that a specific measurement method of the melting point (Tm) is as described in the contents of the Examples section below.

<Requirement (A-c)>

The polymer (A) according to the present invention has a melt flow rate (MFR) as measured at 260°C under a load of 5.0 kg in accordance with ASTM D1238, usually within a range of 1 g/10 minutes to 100 g/10 minutes, more preferably 2 g/10 minutes to 90 g/10 minutes, and further preferably 3 g/10 minutes to 80 g/10 minutes. Within the aforementioned range of the melt flow rate, the polymer (A) can be easily mixed with both the polymer (B) and copolymer (C) described below, and the resin composition (X) can be easily extruded. Within the aforementioned range of the melt flow rate, it is easier to mold the resin composition (X) into a mandrel with a uniform outer diameter.

<<Method for producing polymer (A)>>

The polymer (A) according to the present invention may be produced by polymerizing 4-methyl-1-pentene, or may be produced by thermally decomposing a high molecular weight 4-methyl-1-pentene polymer. The polymer (A) may also be purified by a method such as solvent fractionation fractionating the polymer (A) by its solubility difference for solvents, or molecular distillation fractionating the polymers (A) by their differences in a boiling point.

The 4-methyl-1-pentene polymer used as the polymer (A) according to the present invention is obtained by using conventionally known catalysts for olefin polymerization, such as a vanadium-based catalyst, a titanium-based catalyst, a magnesium-supported titanium catalyst, and metallocene catalysts described in WO01/53369, WO01/27124, JPH3-193796A, or JPH2-41303A and polymerizing 4-methyl-1-pentene with an $\alpha$-olefin having 8 or more and 18 or less carbon atoms, excluding 4-methyl-1-pentene, if necessary.

The 4-methyl-1-pentene polymer used as the polymer (A) according to the present invention, which is a commercially available product, can be used, and examples thereof include TPX (registered trademark) manufactured by Mitsui Chemicals, Inc.

<Propylene polymer (B)>

The propylene polymer (B) that is one of the components contained in the following resin composition (X) forming the mandrel of the present invention (hereinafter may be abbreviated to as a "polymer (B)") is a polymer that is mainly composed of a constituent unit derived from propylene.

Examples of the polymer (B) according to the present invention can include a propylene homopolymer or a copolymer of propylene and at least one kind of $\alpha$-olefin having 2 to 20 carbon atoms other than propylene (propylene·$\alpha$-olefin copolymer).

Here, examples of the $\alpha$-olefins having 2 to 20 carbon atoms excluding propylene include ethylene, 1-butene, 1-pentene, 1-hexene, 4-methyl-1-pentene, 1-octene, 1-decene, 1-dodecene, 1-tetradecene, 1-hexadecene, 1-octadecene, and 1-eicosene. Preferred is ethylene or $\alpha$-olefins having 4 to 10 carbon atoms.

The copolymer of propylene and these $\alpha$-olefins may be random copolymers, or may be block copolymers.

Examples of the copolymer include a propylene-ethylene copolymer, a propylene·1-butene copolymer, and a propylene·ethylene·1-butene copolymer.

As the polymer (B), a propylene homopolymer or a propylene·$\alpha$-olefin copolymer can be selected according to target physical properties of a desired mandrel.

The polymer (B) according to the present invention desirably has a melt flow rate (MFR) measured at 230°C under a load of 2.16 kg in accordance with ASTM D1238, preferably within a range of 0.1 to 50 g/10 minutes, more preferably 0.5 to 45 g/10 minutes, and further preferably 1.0 to 40 g/10 minutes. When the melt flow rate is the lower limit value described above or more, the polymer (B) has a not too high melt viscosity and has moderate flowability, thereby facilitating molding processing, which is preferred. When the melt flow rate is the upper limit value described above or less, the polymer (B) has a not too low melt viscosity and has moderate flowability, thereby enabling easy adjustment of flowability upon molding, which is preferred.

<4-Methyl-1-pentene·$\alpha$-olefin copolymer (C)>

The 4-methyl-1-pentene·$\alpha$-olefin copolymer (C) (hereinafter may be abbreviated to as a "copolymer (C)"), which is one of the components of the following resin composition (X) that forms the mandrel of the present invention, is a copolymer of 4-methyl-1-pentene and $\alpha$-olefin satisfying the following requirements (C-a) to (C-e):

<Requirement (C-a)>

The copolymer(C) is composed of 92 to 60 mol% of a constituent unit (iii) derived from 4-methyl-1-pentene and 8 to 40 mol% of a constituent unit (iv) derived from an $\alpha$-olefin having 2 to 4 carbon atoms, provided that the total of the constituent unit (iii) and the constituent unit (iv) is 100 mol%.
The value of the content rate (mol%) of each constituent unit in the copolymer (C) according to the present invention is, as in the case of aforementioned polymer (A), a value calculated by the measurement method by $^{13}$C-NMR. It is to be noted that a specific measurement method is, as in the case of the aforementioned polymer (A), as described in the contents of Examples below.
The content rate of constituting unit (iii) is 60 mol% or more and 92 mol% or less, preferably 65 mol% or more and 90 mol% or less, and more preferably 68 mol% or more and 89 mol% or less, and further preferably 70 mol% or more and 88 mol% or less.
The content rate of constituent unit (iii) in the copolymer (C) according to the present invention being 60 mol% or more, allows a mandrel formed of the following resin composition (X) to have stress relaxation properties.
The content rate of constituent unit (iv) is 8 mol% or more and 40 mol% or less, preferably 10 mol% or more and 35 mol% or less, more preferably 11 mol% or more and 32 mol% or less, and further preferably 12 mol% or more and 30 mol% or less.
The content rate of constituent unit (iv) in the copolymer (C) according to the present invention, being 8 mol% or more, provides favorable compatibility for both the polymer (A) and the polymer (B). The content rate of the constituent unit (iv) being 40 mol% or less allows a mandrel formed of the following resin composition (X) to have stress relaxation properties.
Examples of the $\alpha$-olefin having 2 or more and 4 or less carbon atoms, forming the constituent unit (iv) include, for example, ethylene, propylene, and 1-butene, for example. These can be used singly or in combinations of two or more to the extent that the effects of the present invention are not impaired. Among these, propylene is particularly preferred, which provides compatibility for both the polymer (A) and the polymer (B) used in the resin composition (X) below.
Stress relaxation properties of the copolymer (C) according to the present invention can be evaluated, for example, by a loss tangent tan$\delta$, which is expressed as a ratio of the loss elastic modulus G'' to the storage elastic modulus G' (G''/G') measured by dynamic viscoelasticity. The storage elastic modulus G' is an elastic component that stores energy and retains stress when stress is applied. The loss elastic modulus G'' is a viscous component that converts energy into heat and releases it (diffuses it to outside) when stress is applied. Therefore, the higher the loss tangent tan$\delta$ of a material under a specific temperature environment, the more easily an impact is absorbed and the more highly stress relaxation properties are exhibited.
The copolymer (C) according to the present invention should not be limited, but has a maximum value of loss tangent tan$\delta$ (hereinafter may be referred to as a "tan$\delta$ peak value") obtained by dynamic viscoelasticity measurement, which is preferably in a range of 0.5 to 5.0, more preferably 0.6 to 4.5, and further preferably 0.7 to 4.0, in a temperature range of -40 to 150°C and torsion mode, with a frequency of 10 rad/s (1.6 Hz) and strain setting of 0.1%.
For the following resin composition (X) that forms a mandrel, when the polymer (A), the polymer (B), and the copolymer (C), are included, the tan$\delta$ peak value of the single copolymer (C) being 1.0 or more allows stresses such as strain and deformation generated upon molding of mandrel and vulcanization of rubber hose, for example to be likely to be relaxed, resulting in an effect excellent in durability in repeated use being exhibited, which is preferred.
The copolymer (C) according to the present invention should not also be limited, and has a temperature when the loss tangent tan$\delta$ obtained by dynamic viscoelasticity measurement reaches the maximum value (hereinafter may be referred to as a "tan$\delta$ peak temperature"), preferably in a range of -30 to 60°C and more preferably -20 to 50°C, in a temperature range of -40 to 150°C and torsion mode, with a frequency 10 rad/s (1.6 Hz) and strain setting of 0.1%.
Furthermore, for the following resin composition (X) that forms a mandrel, when the polymer (A), the polymer (B), and the copolymer (C) are included, the tan$\delta$ peak temperature of the single copolymer (C) staying in the range of 10 to 50°C allows stresses such as strain and deformation generated upon forming of mandrel and vulcanization of rubber hose, for example to be likely to be relaxed, resulting in an effect excellent in durability in repeated use being exhibited, which is preferred. It is to be noted that a specific measurement method is as described in the contents of Examples below.

The tan$\delta$ peak value and tan$\delta$ peak temperature can be adjusted by a composition ratio of the constituent unit (iii)/constituent unit (iv) in the copolymer (C), for example.

<Requirement (C-b)>

The copolymer (C) according to the present invention has an intrinsic viscosity [$\eta$] as measured in decalin at 135°C within a range of 0.5 to 4.0 dl/g, preferably 0.6 to 3.5 dl/g, and more preferably 0.8 to 3.0 dl/g. Within the aforementioned range of the intrinsic viscosity [$\eta$] of the copolymer (C), the amount of low molecular weight component is little, as a result of which stickiness of the mandrel formed of the resin composition (X) below is reduced, facilitating extrusion of mandrel, which is preferred. It is to be noted that a specific measurement method is as described in Examples below.

<Requirement (C-c)>

The copolymer (C) according to the present invention has a molecular weight distribution (Mw/Mn), which is a ratio of the weight-average molecular weight (Mw) to the number-average molecular weight (Mn) as measured by gel permeation chromatography (GPC), within a range of 1.0 to 3.5. The molecular weight distribution (Mw/Mn) described above is preferably 1.2 to 3.0 and more preferably 1.5 to 2.5.

When the molecular weight distribution (Mw/Mn) described above is 3.5 or less, influences of low molecular weight derived from a composition distribution and low stereoregular polymer are less significant, and stickiness of a mandrel formed of the resin composition (X) below is reduced, facilitating extrusion of mandrel, which is preferred.

The weight-average molecular weight (Mw) of the copolymer (C) according to the present invention, as measured by gel permeation chromatography (GPC), is preferably 500 to 10,000,000, more preferably 1,000 to 5,000,000, further preferably 1,000 to 2,500,000 in terms of polystyrene. Details of measurement conditions, for example, are as described in the contents of Examples below.

<Requirement (C-d)>

The copolymer (C) according to the present invention has a density of 825 to 860 kg/m$^3$ and preferably 830 to 850 kg/cm$^3$. The copolymer (C) having a density within the aforementioned range provides uniform and favorable compatibility for both the polymer (A) and the polymer (B), included in the resin composition (X) below, which is preferred. The mandrel formed of the resin composition (X) below is also advantageous because it can be adjusted to a mandrel with a uniform diameter. Note however, details of measurement conditions, for example, are as described in the contents of Examples below.

<Requirement (C-e)>

The copolymer (C) according to the present invention has no melting point (Tm) observed as measured by a differential scanning calorimeter (DSC) or has Tm in a range of lower than 160°C. In a case in which the copolymer (C) has the melting point (Tm), the upper limit thereof is preferably 150°C, more preferably 145°C, and further preferably 140°C or lower.

The value of the aforementioned melting point is a value that varies depending on stereoregularity of the copolymer (C) as well as the $\alpha$-olefin of the constituent unit (iv), which is polymerized together. The value of the aforementioned melting point can be adjusted by controlling a composition to a desired composition using the catalyst for olefin polymerization described below. It is to be noted that details of measurement conditions, for example, as in the case of the polymer (A) described above, are as described in the contents of Examples below.

<<Method for producing copolymer (C)>>

A method for producing the copolymer (C) according to the present invention is not particularly limited, and for example, it can be produced by polymerizing 4-methyl-1-pentene and the aforementioned $\alpha$-olefin having 2 to 4 carbon atoms in the presence of an appropriate polymerization catalyst such as a magnesium-supported titanium catalyst or a metallocene catalyst.

As a polymerization catalyst that can be used herein, a conventionally known catalyst, such as a magnesium-supported titanium catalyst or a metallocene catalyst described in WO01/53369, WO01/27124, JPH3-193796A, or JPH2-41303A, WO2011/055803, or WO2014/050817, for example, is suitably used. Polymerization can be carried out by appropriately selecting a method from liquid-phase polymerization methods including dissolution polymerization and suspension polymerization, for example, as well as a gas-phase polymerization method, for example.

In the liquid-phase polymerization method, an inert hydrocarbon solvent can be used as a solvent constituting the liquid phase. Examples of the inert hydrocarbon include aliphatic hydrocarbons including propane, butane, pentane, hexane, heptane, octane, decane, dodecane, and kerosene, for example; alicyclic hydrocarbons including cyclopentane, cyclohexane, methylcyclopentane, and methylcyclohexane, for example; aromatic hydrocarbons including benzene, toluene, and xylene, for example; and halogenated hydrocarbons including ethylene chloride, chlorobenzene, dichloromethane, trichloromethane, and tetrachloromethane, for example; and mixtures thereof, for example.

The liquid-phase polymerization method can also be bulk polymerization in which a monomer corresponding to the constituent unit (iii) derived from the aforementioned 4-methyl-1-pentene (i.e., 4-methyl-1-pentene) and a monomer corresponding to the constituent unit (iv) derived from the aforementioned $\alpha$-olefin having 2 to 4 carbon atoms (i.e., the aforementioned $\alpha$-olefin having 2 to 4 carbon atoms), themselves are used as solvents.

It is to be noted that by carrying out stepwise copolymerization of the aforementioned 4-methyl-1-pentene with the aforementioned $\alpha$-olefin having 2 to 4 carbon atoms, composition distributions of the constituent unit (iii) of 4-methyl-1-pentene and the constituent unit (iv) of the $\alpha$-olefin having 2 to 4 carbon atoms, constituting the 4-methyl-1-pentene·$\alpha$-olefin copolymer (C), can also be appropriately controlled.

A polymerization temperature is preferably -50 to 200°C, more preferably 0 to 100°C, and further preferably 20 to 100°C. Polymerization pressure is preferably gauge pressure of ordinary pressure to 10 MPa and more preferably gauge pressure of ordinary pressure to 5 MPa.

Upon polymerization, hydrogen may be added for the purpose of controlling a molecular weight and polymerization activity of polymer to be generated. The appropriate amount of hydrogen to be added is approximately 0.001 to 100 NL relative to 1 kg of the total of the amount of 4-methyl-1-pentene described above and the amount of $\alpha$-olefin having 2 to 4 carbon atoms described above.

<Resin composition (X)>

The resin composition (X), forming the mandrel of the present invention, is a resin composition including the 4-methyl-1-pentene-based polymer (A) satisfying the requirements (A-a) to (A-c), in the range of 50 to 90 parts by mass, preferably 52 to 88 parts by mass, more preferably 54 to 86 parts by mass, and further preferably 56 to 84 parts by mass, the propylene polymer (B) in the range of 5 to 40 parts by mass, preferably 6 to 35 parts by mass, more preferably 7 to 30 parts by mass, and further preferably 8 to 25 parts by mass, and the copolymer (C) satisfying the requirements (C-a) to (C-e) in the range of 5 to 30 parts by mass, preferably 6 to 28 parts by mass, more preferably 7 to 26 parts by mass, and further preferably 8 to 24 parts by mass (provided that the total of (A), (B) and (C) is 100 parts by mass).

Within the aforementioned range of the compounded amount of polymer (A) according to the present invention, compared to the case where the compounded amount is less than the aforementioned range, a mandrel that exhibits heat resistance and releasability as well as can withstand the thermal history of repeated use, is obtained. Compared to the case where the compounded amount is more than the aforementioned range, a mandrel having flexibility and excellent handleability is also obtained.

The resin composition (X) according to the present invention preferably has a storage elastic modulus G' of dynamic viscoelasticity at 180°C, as measured under the conditions of a frequency of 10 rad/s (1.6 Hz), rate of temperature rise of 2°C/min and strain amount of 0.1%, within a range of 10 to 100 MPa, more preferably 12 MPa or higher and 90 MPa or lower, further preferably 14 MPa or higher and 80 MPa or lower, and particularly preferably 15 MPa or higher and 70 MPa or lower. It is to be noted that a specific measurement method of the storage elastic modulus G' of dynamic viscoelasticity is as described in the contents of Examples below.

The resin composition (X) according to the present invention having a storage elastic modulus G' of dynamic viscoelasticity at 160°C within the aforementioned range, provides a mandrel excellent in performance balance achieving both heat resistance and flexibility at high temperatures. The resin composition (X) having a storage elastic modulus G' of dynamic viscoelasticity at 160°C of lower than 10 MPa, is not suitable for a mandrel for rubber hose production due to lack of heat resistance at high temperatures.

In a case in which the storage elastic modulus G' of dynamic viscoelasticity at 160°C exceeds 100 MPa, the rigidity is too high at high temperatures, making it difficult for a mandrel to bend and not to be able to have favorable handleability.

The resin composition (X) according to the present invention is obtained by mixing the polymer (A), the polymer (B), and the copolymer (C) in the specific proportions described above, and the resin composition (X) can be prepared by using various known methods, such as a method for dry-blending the aforementioned components by using a Henschel mixer, tumbler blender, and V-blender, for example, a method for melt kneading the mixture after the dry blending by using a single-screw extruder, twin-screw extruder, and Banbury mixer, for example, and a method for stirring and mixing the mixture in the presence of a solvent.

In the resin composition (X) according to the present invention, an antioxidant can be contained, if necessary, to the extent that the effects of the present invention are not impaired. As the antioxidant, known antioxidants can be used. Specifically, a hindered phenol compound, a sulfur-based antioxidant, a lactone-based antioxidant, an organic phosphite compound, an organic phosphonite compound, or combinations of several kinds thereof, can be used.

The resin composition (X) according to the present invention may contain various kinds of additives such as conventionally known additives, such as a weather stabilizer, an ultraviolet absorber, an antistatic agent, an anti-slip agent, an anti-blocking agent, an anti-fogging agent, a crystal nucleating agent, a lubricant, pigments, dyes, an anti-aging agent, a hydrochloric acid absorbent, inorganic or organic fillers, organic or inorganic foaming agents, a cross-linking agent, a cross-linking aid, an adhesive, a softening agent, and a flame retardant, to the extent that the effects of the present invention are not impaired. The resin composition (X) may also contain various kinds of reinforcing materials such as a glass fiber, a glass bead, a glass flake, a carbon fiber, a potassium titanate whisker, an alumina fiber, quartz powder, talc, diatomaceous earth, mica, calcium carbonate, barium sulfate, and zinc oxide.

With respect to the content of various additives and reinforcing materials described above, the content of the component other than the polymer (A), the polymer (B), and the copolymer (C) in the resin composition (X) is preferably 5 parts by mass or less and more preferably 3 parts by mass or less, relative to 100 parts by mass of the total of the polymer (A), the polymer (B), and the copolymer (C).

A resin other than the polymer (A), the polymer (B), and the copolymer (C) may also be included. In such a case, the content of the component other than the polymer (A), the polymer (B), and the copolymer (C) in the resin composition (X) is preferably 20 parts by mass or less and more preferably 10 parts by mass or less, relative to 100 parts by mass of the total of the polymer (A), the polymer (B), and the copolymer (C).

<Mandrel>

The mandrel of the present invention is formed of the resin composition (X).

The mandrel of the present invention is formed of the resin composition (X) by using a conventionally known extrusion method, for example, and a mandrel having flexibility while maintaining heat resistance, releasability, and recyclability that can withstand the thermal history of repeated use, which are characteristics of the 4-methyl-1-pentene-based polymer, is obtained. Reasons for these effects exhibited are presumed as follows.

With respect to the resin composition (X) according to the present invention, it is considered that as the copolymer (C) with high stress relaxation properties has characteristics of being compatible with both the polymer (A) having heat resistance and the polymer (B), the resin composition (X) forms an ideal structure in which the three components are finely dispersed, respectively.

Therefore, the mandrel of the present invention, is considered to be able to maintain heat resistance, releasability, and recyclability that can withstand the thermal history of repeated use, which are characteristic of the polymer (A).

In a case in which the polymer (A) is used singly to form a mandrel instead of the resin composition (X) according to the present invention, the mandrel has heat resistance, releasability, and recyclability that can withstand the thermal history of repeated use, which are the conventional characteristics. On the other hand, due to the characteristics of slightly high rigidity, a mandrel with a large diameter does not solve the problem of slightly poor handleability when wound on a drum upon rubber hose production.

In a case in which a mandrel is formed by compounding two components of the polymer (A) and the polymer (B), instead of the resin composition (X) according to the present invention, the combination of the two components resulting in an incompatible combination, thereby cannot sufficiently exhibit the heat resistance and releasability, characteristics of the polymer (A). Moreover, voids, for example, have a likelihood of being generated by high temperature steam upon vulcanization of rubber hose, leading to worsening of quality of a mandrel.

In a case in which a mandrel is formed by compounding two components of the polymer (A) and the copolymer (C), instead of the resin composition (X) according to the present invention, the combination of the two components resulting in a compatible combination, thereby can maintain releasability characteristic of the polymer (A). Furthermore, inclusion of the copolymer (C) with high stress relaxation properties imparts flexibility to obtain a mandrel having favorable handleability. However, there is a concern about insufficient rigidity under high temperatures upon vulcanization of rubber hose.

As the mandrel formed of the resin composition (X) according to the present invention includes three components of the polymer (A), the polymer (B), and the copolymer (C), in specific compounding ratios, the polymer (A) is thereby entirely present in a form such as a continuous phase, and the polymer (B) can further impart rigidity, thereby making it possible for the mandrel to also maintain releasability without lowering heat resistance.

In the resin composition (X) according to the present invention, each of the polymer (A), the polymer (B), and the copolymer (C) is finely dispersed, as a result of which the obtained mandrel can have recyclability that can withstand the thermal history of repeated use and flexibility.

In a case in which a mandrel with a small diameter is fabricated, the mandrel also facilitates relaxation of stress caused upon molding of rubber hose reinforcing layer and due to the vulcanization process, for example, and therefore the relaxation of stress eliminates a problem of a mandrel being deformed followed by elongation, enabling performance balance of the mandrel to be contemplated.

<<Method for producing mandrel>>

The mandrel of the present invention can be molded by using the resin composition (X) and by conventionally known extrusion, for example. The extrusion method is not particularly limited, and it is usually carried out by extruding the resin composition (X), and then allowing a molten parison after having been immediately extruded to pass through a sizer in order to improve a dimensional accuracy of the mandrel. When a mandrel is extruded, a value denoted as a ratio (D2/D1) of a mandrel diameter (D2) after formation to an extrusion die diameter (D1) is preferably 0.4 or more, more preferably 0.5 or more, and further preferably 0.6 or more. When the value denoted as the ratio (D2/D1) of a mandrel diameter (D2) after formation to an extrusion die diameter (D1) stays in the aforementioned condition, a mandrel diameter with high dimensional accuracy is likely to be obtained.

Usually, a setting temperature of the sizer is preferably (Tm-130)°C or higher, more preferably (Tm-120)°C or higher, and further preferably (Tm-110)°C or higher in relation to a melting point (Tm) of the polymer (A). It is also preferably (Tm-10)°C or lower, more preferably (Tm-20)°C or lower, and further preferably (Tm-30)°C or lower. Within the aforementioned range of the setting temperature of the sizer, a mandrel diameter with high dimensional accuracy has a likelihood to be obtained.

A shape of the mandrel of the present invention is determined by a desired hose shape, and is usually a pipe or rod shape, for example.

Known conventional reinforcing material may be used for the mandrel of the present invention to the extent that the effects of the invention are not impaired. A form of the mandrel may be such that it is formed in a shape of a braid or a spiral. Examples of the reinforcing material include wire and piano wire. Reinforcing yarns may be used, and examples thereof include yarns produced by a polyester fiber, rayon fiber, vinylon fiber, nylon fiber, or aromatic polyamide fiber, for example.

For the purpose of improving an adhesive strength of the reinforcing material described above, an adhesive may be used. Examples of the adhesive include an epoxy resin, isocyanate resin, phenolic resin, and urethane resin.

A method for producing a rubber hose is carried out by a conventionally known method using the aforementioned mandrel of the present invention. Examples of a specific method for producing a rubber hose includes a method for producing the rubber hose, including a step of extruding the resin composition (X) according to the present invention to obtain a mandrel, and a step of producing a rubber hose using the mandrel obtained in the above step.

In more detail, for example, an extruder equipped with a crosshead is fed with an unvulcanized rubber composition forming a rubber inner layer, and a mandrel is introduced so that the crosshead is vertical to an extrusion direction. The mandrel is extruded and while being moved, an outer circumference of the mandrel is uniformly covered with the unvulcanized rubber composition so that a thickness of the composition is a desired thickness. Then, two layers of reinforcing materials are wrapped, if necessary, around an outside of the unvulcanized rubber composition layer or wrapped so that the two layers intersect with each other. Furthermore, other extruder may be used to cover the resulting layer with a rubber material that forms an outer layer. Thereafter, a vulcanization reaction is carried out in appropriate equipment such as a high-temperature steam furnace or a continuous oven. In the case of rubber cross-linking (vulcanization) using sulfur, a temperature of the vulcanization reaction is generally 160°C. Finally, a rubber hose is obtained by applying water pressure to the mandrel and pulling out the rubber hose.

The mandrel of the present invention is also used as a mandrel for plastic hose production, but can be suitably used as mandrels for producing rubber hoses, such as a steam hose, water hose, and air hose.

Examples

The present invention will be more specifically described below based on Examples, but the present invention is not limited to these Examples. The measurement methods of physical properties of the polymers and the resin compositions, used in Examples and Comparative Examples below, the fabrication method of test specimens, and evaluation methods thereof, are as follows.

<<Measurement method of physical properties of polymer>>

<Content rate of constituent unit>

Quantification of the content of the 4-methyl-1-pentene and the $\alpha$-olefin in a polymer was based on the results

measured by $^{13}$C-NMR using the following pieces of apparatus under the following conditions. However, the $\alpha$-olefin content in the measurement results obtained herein does not include the content of 4-methyl-1-pentene.

By using an ECP500 nuclear magnetic resonance apparatus manufactured by JEOL Ltd., measurements were carried out under the conditions: A solvent: mixed solvent of orthodichlorobenzene/deuterated benzene (80/20% by volume), sample concentration: 55 mg/0.6 mL, measurement temperature: 120°C, observation nucleus: $^{13}$C (125 MHz), sequence: single-pulse proton decoupling, pulse width: 4.7 psec (45° pulse), repetition time: 5.5 sec, number of accumulations: 10,000 times or more, and chemical shift reference value: 27.50 ppm. A composition of the 4-methyl-1-pentene·$\alpha$-olefin was quantified by the resulting $^{13}$C-NMR spectrum.

<Melt flow rate (MFR)>

In accordance with ASTM D1238, the polymer (A) was measured at a temperature of 260°C under a load of 5 kg, and the copolymer (C) was measured at a temperature of 230°C under a load of 2.16 kg.

<Melting point (Tm)>

In accordance with JIS K7121, the melting point was defined as the highest temperature of a melting peak apex to be measured at a rate of temperature rise of 10°C/minute by using a DSC7000X differential scanning calorimeter manufactured by Hitachi High-Tech Science Corporation.

<Intrinsic viscosity>

The intrinsic viscosity is the value measured at 135°C in a decalin solvent by using a Ubbelohde viscometer. Approximately 20 mg of polymerized powder, a pellet or a resin mass was taken and dissolved in 15 mL of decalin to measure a specific viscosity, $\eta$sp in an oil bath heated to 135°C. To this decalin solution was added 5 mL of a decalin solvent for dilution of the solution, and the specific viscosity $\eta$sp was measured in the same manner. This dilution operation was repeated two more times, and the value of $\eta$sp/C obtained when a concentration (C) was extrapolated to zero was calculated as the intrinsic viscosity (see formula below).

$$[\eta]=\lim(\eta sp/C) \quad (C{\to}0)$$

<Weight-average molecular weight (Mw), number-average molecular weight (Mn), and molecular weight distribution (Mw/Mn value)>

A molecular weight was measured by gel permeation chromatography (GPC).

Specifically, an ALC/GPC150-Cplus manufactured by Waters Inc. (integrated differential refractometer detector type) was used as a liquid chromatograph, two GMH6-HT columns and two GMH6-HTL columns, manufactured by Tosoh Corporation were connected in series and used as separation columns, and o-dichlorobenzene as a mobile phase medium and 0.025% by mass dibutylhydroxytoluene (manufactured by Takeda Pharmaceutical Company Limited) as an antioxidant, were used, and the mobile phase medium was moved at a rate of 1.0 mL/min, a sample concentration was 15 mg/10 mL, a sample injection volume was 500 $\mu$L, and the differential refractometer was used as the detector. Standard polystyrenes with a weight-average molecular weight (Mw) of 1,000 or higher and 4000,000 or lower, manufactured by Tosoh Corporation, were used.

The obtained chromatograms were analyzed according to a known method with a calibration curve prepared by using standard polystyrene samples, and a weight-average molecular weight (Mw), number-average molecular weight (Mn), and molecular weight distribution (Mw/Mn value) were calculated. The measurement time per sample was 60 min.

<Density>

The density was measured by using a density gradient tube in accordance with JIS K7112.

<Synthesis of polymer (A-1)>

According to the method described in WO2006/054613, proportions of 4-methyl-1-pentene, 1-decene, and hydrogen were adjusted. Specifically, the solid titanium catalyst component obtained by reaction of anhydrous magnesium chloride, 2-ethylhexyl alcohol, 2-isobutyl-2-isopropyl-1, 3-dimethoxypropane, and titanium tetrachloride, was used as a polymerization catalyst, and in the presence of triethylaluminum, 4-methyl-1-pentene and 1-decene were copolymerized in the presence of hydrogen, to obtain a polymer (A-1). The measurement results of each physical property are shown in Table 1.

<Polymer (B)>

As the polymer (B), a propylene homopolymer (Prime Polypro F113G manufactured by Prime Polymer Co., Ltd.; melt flow rate (MFR; in accordance with ASTM D1238, temperature 230°C, 2.16 kg load): 3 g/10 minutes; melting point (Tm): 165°C) [Polymer (B-1)], was used.

<Synthesis of copolymer (C)>

As the copolymer (C), two kinds of copolymers with different 4-methyl-1-pentene content and different content of an $\alpha$-olefin having 2 to 4 carbon atoms, were prepared. These copolymers are distinguished as a copolymer (C-1) and a copolymer (C-2), and a synthesis method of each is as described below.

<Synthesis of copolymer (C-1)>

A fully nitrogen-substituted SUS autoclave of 1.5 L volume with stirring blades, was charged with 300 ml of n-hexane (dried on activated alumina under a dry nitrogen atmosphere) and 450 ml of 4-methyl-1-pentene at 23°C. The autoclave was charged with 0.75 ml of a 1.0 mmol/ml toluene solution of triisobutylaluminum (TIBAL), and the mixture was stirred.
Next, the autoclave was heated to an internal temperature of 60°C and pressurized with propylene to total pressure (gauge pressure) of 0.40 MPa.
Subsequently, 0.34 ml of a toluene solution containing 1 mmol of methylaluminoxane in terms of aluminum, which had been preliminarily prepared, and 0.01 mmol of diphenylmethylene (1-ethyl-3-t-butyl-cyclopentadienyl) (2,7-di- t-butyl-fluorenyl)zirconium dichloride, was pressed into the autoclave with nitrogen to start a polymerization reaction.
During the polymerization reaction, the temperature was adjusted so that an internal temperature of the autoclave was 60°C.
After 60 minutes from the start of polymerization, 5 ml of methanol was pressurized into the autoclave with nitrogen to terminate the polymerization reaction, and then the inner autoclave was depressurized to atmospheric pressure. After the depressurization, acetone was added to the reaction solution while stirred.
The resulting copolymer in a powder form, containing the solvent was dried at 100°C for 12 hours under reduced pressure. The weight of the product, the copolymer (C-1), was 36.9 g, and the content of 4-methyl-1-pentene in the copolymer was 72.4 mol% and the content of propylene was 27.6 mol%. No melting point was observed when measured by differential scanning calorimeter (DSC). The measurement results for each physical property are shown in Table 1.

<Synthesis of copolymer (C-2)>

A fully nitrogen-substituted SUS autoclave of 1.5 L volume with stirring blades was charged with 300 ml of n-hexane (dried on activated alumina under a dry nitrogen atmosphere) and 450 ml of 4-methyl-1-pentene at 23°C. The autoclave was charged with 0.75 ml of a 1.0 mmol/ml toluene solution of triisobutylaluminum (TIBAL), and the mixture was stirred.
Next, the autoclave was heated to an internal temperature of 60°C and pressurized with propylene to total pressure (gauge pressure) of 0.19 MPa.
Subsequently, 0.34 ml of a toluene solution containing 1 mmol of methylaluminoxane in terms of aluminum, which had been preliminarily prepared, and 0.01 mmol of diphenylmethylene (1-ethyl-3-t-butyl-cyclopentadienyl)(2,7-di-t-butyl-fluorenyl)zirconium dichloride, was pressed into the autoclave with nitrogen to start a polymerization reaction.
During the polymerization reaction, a temperature was adjusted so that an internal temperature of the autoclave was 60°C.
After 60 minutes from the start of polymerization, 5 ml of methanol was pressurized into the autoclave with nitrogen to terminate the polymerization reaction, and then an inner autoclave was depressurized to atmospheric pressure. After the depressurization, acetone was added to the reaction solution while stirred.
The resulting copolymer in a powder form, containing the solvent was dried at 130°C for 12 hours under reduced pressure. The weight of the product, the copolymer (C-2), was 44.0 g, and the content of 4-methyl-1-pentene in the copolymer was 84.1 mol% and the content of propylene was 15.9 mol%. When measured by differential scanning calorimeter (DSC), the melting point was 130°C. The measurement results for each physical property are shown in Table 1.

<Dynamic viscoelasticity measurement of each polymer>

Predetermined amounts of the polymer (A-1), the copolymer (C-1) and the copolymer (C-2), obtained by the aforementioned method are filled in a mold frame made of SUS, respectively, and in the case of the polymer (A-1), a temperature of a heating plate was set to 270°C, and in the case of the copolymer (C-1) and the copolymer (C-2), temperatures of heating plates were set to 200°C, and by using a hydraulic heat press machine (PEWR-30 manufactured by Kansai Roll Co., Ltd.), each polymer or the copolymer was pre-heated for 7 minutes and pressurized at gauge pressure of 10 MPa for 2 minutes, then transferred to a cooling plate set at 20°C, compressed at gauge pressure of 10 MPa followed by cooled for 3 minutes to fabricate a press sheet for measurement with a thickness of 2.0 mm.

Next, the press sheet for measurement with a thickness of 2.0 mm obtained by the method described above was subjected to measurements of temperature dispersion of dynamic viscoelasticity at -40 to 150°C with a rheometer (MCR301 manufactured by Anton Paar GmbH) under the conditions of a torsion mode, a frequency of 10 rad/s (1.6 Hz), an amount of strain of 0.1%, and a rate of temperature rise of 2°C/minute, and then a tanδ peak value and tanδ peak temperature were measured. The results are shown in Table 1.

[Table 1]

Table 1

| | | Unit | Copolymer (A-1) | Copolymer (C-1) | Copolymer (C-2) |
|---|---|---|---|---|---|
| Composition | Content rate of constituent unit (i) or (iii) | mol% | 98.1 | 72.4 | 84.1 |
| | Component of constituent unit (ii) or (iv) | mol% | 1-Decene | Propylene | Propylene |
| | Content rate of constituent unit (ii) or (iv) | mol% | 1.9 | 27.6 | 15.9 |
| Melt flow rate (MFR: 260°C, 5 kg load) | | g/10 min | 26 | - | - |
| Melt flow rate (MFR: 230°C, 2.16 kg load) | | g/10 min | - | 11 | 10 |
| Melting point (Tm) | | °C | 232 | Not observed | 130 |
| Intrinsic viscosity [η] | | dl/g | 2.4 | 1.5 | 1.5 |
| Weight-average molecular weight (Mw) | | - | 540000 | 330000 | 340000 |
| Number-average molecular weight (Mn) | | - | 142000 | 158000 | 162000 |
| Molecular weight distribution (Mw/Mn) | | - | 3.8 | 2.1 | 2.1 |
| Density | | kg/m$^3$ | 833 | 840 | 838 |
| Dynamic viscoelasticity | Tanδ peak value | - | 0.15 | 2.72 | 1.50 |
| | Tanδ peak temperature | °C | 41 | 31 | 40 |

<Dynamic viscoelasticity measurement of resin composition (X)>

For each of the polymer (A-1), polymer (B), copolymer (C-1), and copolymer (C-2), to 100 parts by mass of the resin composition obtained by having dry blended each thereof at each specified compounding ratio in Examples and Comparative Examples shown in Table 2 below, were compounded 1,000 ppm of tri(2,4-di-t-butylphenyl)phosphate as the secondary antioxidant, 1,000 ppm of n-octadecyl-3-(4'-hydroxy-3',5'-dit-butylphenyl) propionate as a heat stabilizer, and 500 ppm of calcium stearate as a hydrochloric acid absorbent.

Next, a strand was discharged by using a twin-screw extruder (TEX25αIII manufactured by Japan Steel Works, Ltd.; screw diameter: Φ25 mm, L/D = 52) under conditions of a cylinder setting temperature: 270°C, extrusion amount: 5 kg/hour, and screw rotation speed: 100 rpm, then introduced to a pelletizer (KM-100 manufactured by KATSUMIX CO., LTD.) while immersed in a water tank, and granulated to obtain a pellet.

The pellet of the resin composition obtained by the above method was filled into a mold frame made of SUS in a prescribed amount, pre-heated for 7 minutes and pressurized at gauge pressure of 10 MPa for 1 minute by using a hydraulic heat press machine (PEWR-30 manufactured by Kansai Roll Co., Ltd.) where a heating plate was set to a temperature of 270°C, then transferred to a cooling plate set at 20°C, compressed at gauge pressure of 10 MPa followed by cooled for 3 minutes to fabricate a press sheet for measurement with a thickness of 2.0 mm.

Next, the press sheet for measurement with a thickness of 2.0 mm obtained by the method described above was subjected to measurements of temperature dispersion of dynamic viscoelasticity at -20 to 240°C with a rheometer (MCR301 manufactured by Anton Paar GmbH) under the conditions of a torsion mode, frequency of 10 rad/s (1.6 Hz), strain amount of 0.1%, and rate of temperature rise of 2°C/minute, and then a storage elastic modulus G' at 160°C was measured. The results are shown in Table 2.

<Measurement of tensile modulus of elasticity>

For the purpose of comparing rigidity of the molded products obtained from the resin composition (X), the tensile modulus of elasticity was measured.

The pellet of the resin composition (X) obtained by the aforementioned method was used to fabricate a dumbbell test piece Type-IV (thickness 3.2 mm) in accordance with ASTM D638 by using an injection molding machine (ES75SXIII manufactured by Toshiba Machine Co., Ltd.; mold clamping force: 735 kN; screw diameter: Φ32 mm) under the following molding conditions.

- Cylinder setting temperature: 250 to 270°C
- Screw rotation speed: 100 rpm
- Injection pressure: 20 to 24 MPa
- Injection speed: 18 to 22 mm/sec
- Mold temperature: 40°C
- Cooling time: 40 seconds

The dumbbell test piece fabricated was subjected to measurements of tensile modulus of elasticity (MPa) in accordance with ASTM D638 by using a tensile testing machine (Autograph Precision Universal Testing Machine AG-X-P manufactured by Shimadzu Corporation) under conditions of a test rate of 50 mm/min, distance of 65 mm between chucks, distance of 25 mm between mark lines, test temperature of 23°C, and relative humidity of 50% RH. The results are shown in Table 2.

It is said that the larger the value of tensile modulus of elasticity, the more rigid the material is, and the smaller the value of tensile modulus of elasticity, the more flexible the material is.

<<Extrusion of mandrel>>

The fabricated pellet of the resin composition (X) was fed into an extruder (SNT50-28EXT manufactured by Sun NT Co., Ltd., screw diameter: Φ50 mm), and a molten resin was discharged from a die with a circular extrusion cross-section and a diameter of Φ19 mm, passed through a sizer with a diameter of Φ12 mm, to wind a mandrel while immersed in a cooling bath based on the conditions of the forming temperature below. In this process, a mandrel was molded so as to have a diameter of Φ12 mm while extrusion volume and take-up speed were adjusted.

- Cylinder and die setting temperature: 270 to 280°C
- Sizer setting temperature: 130°C
- Cooling water tank (chiller operation): 20°C

<<Molding processability of mandrel>>

Molding of mandrels was performed as described in the contents of "Extrusion molding of mandrel" above, and their conditions were determined based on the following evaluation criteria. The results are shown in Table 2.

[Evaluation criteria for molding processability]

A: Continuous molding was possible and no particular problem occurred.

B: Although the molten resin composition sometimes sagged from the sizer due to its own weight, molding was possible.

C: Molding was not possible.

[Example 1]

A pellet of the resin composition (X-1) was obtained as described by the aforementioned method, by compounding 1,000 ppm of tri(2,4-di-t-butylphenyl)phosphate, 1,000 ppm of n-octadecyl-3-(4'-hydroxy-3',5'-di-t-butylphenyl)propionate, and 500 ppm of calcium stearate, to 100 parts by mass of the total of 80 parts by mass of polymer (A-1), 10 parts by mass of polymer (B-1), and 10 parts by mass of copolymer (C-1).

A mandrel was then molded as described by the aforementioned method. The resulting mandrel was evaluated as described by the methods described above and below. The results are shown in Table 2.

[Example 2]

A mandrel was fabricated in the same manner as in Example 1, except that instead of the resin composition (X-1) used in Example 1, a resin composition replaced with 100 parts by mass of the total of 70 parts by mass of polymer (A-1), 20 parts by mass of polymer (B-1), and 10 parts by mass of copolymer (C-1), was used.

[Example 3]

A mandrel was fabricated in the same manner as in Example 2, except that the copolymer (C-2) was used instead of the copolymer (C-1) used in Example 2.

[Example 4]

A mandrel was fabricated in the same manner as in Example 1, except that instead of the resin composition (X-1) used in Example 1, a resin composition replaced with 100 parts by mass of the total of 60 parts by mass of polymer (A-1), 20 parts by mass of polymer (B-1), and 20 parts by mass of copolymer (C-1) was used.

[Comparative Example 1]

A mandrel was fabricated in the same manner as in Example 1, except that the polymer (A-1) was used singly instead of the resin composition (X-1) used in Example 1.

[Comparative Example 2]

A mandrel was fabricated in the same manner as in Example 1, except that instead of the resin composition (X-1) used in Example 1, a resin composition replaced with 100 parts by mass of the total of 60 parts by mass of polymer (A-1) and 40 parts by mass of the copolymer (C-1) was used.

[Comparative Example 3]

A mandrel was fabricated in the same manner as in Example 1, except that instead of the resin composition (X-1) used in Example 1, a resin composition replaced with 100 parts by mass of the total of 20 parts by mass of polymer (A-1), 70 parts by mass of polymer (B-1), and 10 parts by mass of copolymer (C-1)was used.

<<Method for preparing evaluation sample>>

In order to evaluate quality of a mandrel, assuming a vulcanization process of an unvulcanized rubber composition, an evaluation sample thereof was prepared. One mandrel ($\Phi$12 mm in diameter) of each mandrel with a length of 100 mm obtained from the aforementioned Examples 1 to 4 and Comparative Examples 1 to 3, was inserted between two overlapping sheets of unvulcanized rubber sheets (60 mm wide $\times$ 100 mm long $\times$ 20 mm thick) to be formed by the following formulation. Next, two plates made of SUS (200 mm wide $\times$ 200 mm long $\times$ 4 mm thick), into which hexagonal bolts and nuts (nominal diameter M8) could be incorporated by inserting all threaded rods at the four corners, were used to sandwich the upper and lower surfaces of the evaluation sample so that it could be fixed in the vicinity of the center, and were then uniformly tightened by using the hexagonal bolts and nuts so that the gap was compressed from the initial gap to about half the gap.

[Formulation of unvulcanized rubber sheet]

Ethylene·propylene·non-conjugated diene terpolymer: 100 parts by mass
Paraffin-based oil : 100 parts by mass
Carbon black : 150 parts by mass
Defoaming agent : 5 parts by mass
Zinc oxide : 5 parts by mass
Calcium stearate : 1 part by mass
Vulcanization accelerator: 2.5 parts by mass
Sulfur : 0.5 parts by mass

<Vulcanization and method for evaluating mandrel quality>

The above evaluation sample was allowed to stand in a hot-air dryer set at 160°C for 60 minutes to undergo a vulcanization reaction. After the vulcanization was completed, the evaluation sample was removed from the hot-air dryer and cooled naturally while being allowed to stand at room temperature for 60 minutes. Next, the hexagonal bolts and nuts, for example, were removed from the SUS plate, and the evaluation sample was taken out. For that evaluation sample, releasability of mandrel when the rubber sheet was manually peeled off from the mandrel, was determined based on the following evaluation criteria. Such an operation procedure was defined as one vulcanization.

[Evaluation criteria for releasability of mandrel]

A: The rubber sheet can be easily peeled off and the inner surface of the rubber sheet was clean.
B: The rubber sheet was difficult to peel off. Or the inner surface of the rubber sheet was rough after having peeled off the rubber sheet.
C: The mandrel and rubber sheet adhered to each other, making it difficult to peel off the rubber sheet.

As an evaluation method assuming repeated use of mandrel, the mandrel in the evaluation sample was continued to be used as it is after the second vulcanization as well, and the unvulcanized rubber sheet was replaced with a new one after each vulcanization. The evaluation results of releasability of the mandrel after the first and tenth vulcanization, are shown in Table 2.

<Dimensional change rate of mandrel>

By using a digital caliper (reads to two decimal places), two mandrel diameters, each of which intersects to each other in its vertical direction, were measured. A measurement unit for the mandrel diameter is mm. An average value of these values was determined as the dimensional change rate (%) by using the following formula. The results obtained after the first, fifth and tenth vulcanization is shown in Table 2.

Dimensional change rate (%) = {±[(diameter after vulcanization) - (diameter before vulcanization)]/(diameter before vulcanization)} × 100

[Table 2]

Table 2

|  |  | Unit | Example 1 | Example 2 | Example 3 | Example 4 |
|---|---|---|---|---|---|---|
| Resin Composition | Copolymer (A-1) | Parts by mass | 80 | 70 | 70 | 60 |
|  | Polymer (B-1) | Parts by mass | 10 | 20 | 20 | 20 |
|  | Copolymer (C-1) | Parts by mass | 10 | 10 | - | 20 |
|  | Copolymer (C-2) | Parts by mass | - | - | 10 | - |
| Physical properties of resin composition | Storage elastic modulus G' at 160°C upon dynamic viscoelastic measurement | MPa | 43.5 | 38.3 | 36.3 | 28.6 |
|  | Tensile modulus of elasticity (23°C) | MPa | 1670 | 1500 | 1690 | 1280 |
| Mandrel molding and its quality | Molding processability | - | A | A | A | A |
|  | Releasability after the first vulcanization | - | A | A | A | A |
|  | Releasability after 10th vulcanization | - | A | A | A | A |
|  | Dimensional change rate by one time vulcanization | % | 1.1 | 0.6 | 0.5 | 0.8 |
|  | Dimensional change rate by five time vulcanization | % | 1.6 | 1.5 | 1.4 | 1.3 |
|  | Dimensional change rate by ten time vulcanization | % | 2.2 | 1.7 | 1.6 | 1.5 |

Table 2 (continued)

|  |  | Unit | Comparative Example 1 | Comparative Example 2 | Comparative Example 3 |
|---|---|---|---|---|---|
| Resin Composition | Copolymer (A-1) | Parts by mass | 100 | 60 | 20 |
|  | Polymer (B-1) | Parts by mass | - | - | 70 |
|  | Copolymer (C-1) | Parts by mass | - | 40 | 10 |
|  | Copolymer (C-2) | Parts by mass | - | - | - |

(continued)

| | | Unit | Comparative Example 1 | Comparative Example 2 | Comparative Example 3 |
|---|---|---|---|---|---|
| Physical properties of resin composition | Storage elastic modulus G' at 160°C upon dynamic viscoelastic measurement | MPa | 58.0 | 24.1 | 6.9 |
| | Tensile modulus of elasticity (23°C) | MPa | 1820 | 1110 | 1600 |
| Mandrel molding and its quality | Molding processability | - | A | B | B |
| | Releasability after the first vulcanization | - | A | B | C |
| | Releasability after 10th vulcanization | - | A | B | C |
| | Dimensional change rate by one time vulcanization | % | 1.6 | 1.7 | 2.2 |
| | Dimensional change rate by five time vulcanization | % | 2.2 | 2.4 | 2.8 |
| | Dimensional change rate by ten time vulcanization | % | 2.4 | 2.8 | 3.9 |

Compared to Comparative Example 1, which includes the resin composition of the single polymer (A-1), the resin compositions of Examples 1 to 4 suggest exhibition of flexibility from the measurement values of the tensile modulus of elasticity. The temperature of 160°C, which corresponded to that in a vulcanization reaction for rubber hose production was found to give the moderate flexibility. Furthermore, there was no problem in molding processability of the mandrels, and they have favorable releasability of mandrel, assuming a vulcanization process of rubber hose, and have the small dimensional change rates. Thus, the mandrels have recyclability that can withstand the thermal history of repeated use.

In general, when a mandrel is produced by using a single 4-methyl-1-pentene-based polymer, the mandrel itself has a likelihood of swelling due to the thermal history of the vulcanization process of rubber hose. The mandrels formed of the resin compositions of Examples 1 to 4 resulted in smaller dimensional change rates than the mandrel formed by Comparative Example 1. A clear reason is not known, however, it is considered that the components of the polymer (B) and copolymer (C) included in Examples 1 to 4 have characteristics to shrink due to a thermal history, resulting in the smaller dimensional change rates in mandrel diameters.

The mandrel obtained by Comparative Example 1 has heat resistance, releasability, and recyclability that can withstand the thermal history of repeated use. However, the mandrel has slightly higher rigidity and therefore is assumed to have slightly inferior handleability in the case of a mandrel with a large diameter.

The mandrel obtained by Comparative Example 2 suggests insufficient rigidity from the measurement values of the dynamic viscoelasticity and tensile modulus of elasticity, measured under the aforementioned conditions. The temperature of 160°C, which corresponded to that in the vulcanization reaction in rubber hose production, caused melting out of the resin composition, resulting in lowering releasability of mandrel.

The mandrel obtained by Comparative Example 3 clearly lacked heat resistance. The mandrel can be decided not to have the recyclability that can withstand the thermal history of repeated use.

Industrial Applicability

The mandrels of the present invention can be suitably used as mandrels for plastic hose production. Examples of the mandrels of the present invention include a steam hose, a water hose, and an air hose, for example.

**Claims**

1. A mandrel formed of a resin composition (X), the resin composition (X) comprising:

   50 to 90 parts by mass of a 4-methyl-1-pentene-based (3A) satisfying the following requirements (A-a) to (A-c);

5 to 40 parts by mass of a propylene polymer (B); and

5 to 30 parts by mass of a 4-methyl-1-pentene·α-olefin copolymer (C) satisfying the following requirements (C-a) to (C-e), provided that a total of the (A), the (B), and the (C) is 100 parts by mass:

Requirement (A-a): The polymer (A) is composed of 100 to 90 mol% of a constituent unit (i) derived from 4-methyl-1-pentene and 0 to 10 mol% of a constituent unit (ii) derived from an α-olefin having 5 to 20 carbon atoms excluding 4-methyl-1-pentene, provided that a total of the constituent unit (i) and the constituent unit (ii) is 100 mol%;

Requirement (A-b): The polymer (A) has a melting point (Tm) as measured by a differential scanning calorimeter (DSC) within a range of 200 to 250°C;

Requirement (A-c): The polymer (A) has a melt flow rate (MFR) as measured at 260°C under a load of 5.0 kg in accordance with ASTM D1238, of 1 to 100 g/10 minutes;

Requirement (C-a): The copolymer (C) is composed of 92 to 60 mol% of a constituent unit (iii) derived from 4-methyl-1-pentene and 8 to 40 mol% of a constituent unit (iv) derived from an α-olefin having 2 to 4 carbon atoms, provided that a total of the constituent unit (iii) and the constituent unit (iv) is 100 mol%;

Requirement (C-b): The copolymer (C) has an intrinsic viscosity [η] as measured in decalin at 135°C within a range of 0.5 to 4.0 dl/g;

Requirement (C-c): The copolymer (C) has a molecular weight distribution (Mw/Mn), which is a ratio of the weight- average molecular weight (Mw) to the number-average molecular weight (Mn) as measured by gel permeation chromatography (GPC), within a range of 1.0 to 3.5;

Requirement (C-d): The copolymer (C) has a density within a range of 825 to 860 kg/m$^3$;

Requirement (C-e): The copolymer (C) has no melting point (Tm) as measured by a differential scanning calorimeter (DSC) or has a Tm within a range of lower than 160°C.

2. The mandrel according to claim 1, wherein the resin composition (X) has a storage elastic modulus G' of dynamic viscoelasticity at 160°C measured under the conditions of a frequency of 10 rad/s (1.6 Hz), a rate of temperature rise of 2°C/min and a strain amount of 0.1%, within a range of 10 to 100 MPa.

3. The mandrel according to claim 1, wherein the entire mandrel is formed of a single material of the resin composition (X).

4. The mandrel according to any one of claims 1 to 3, which is for hose production.

5. A method for producing a rubber hose, comprising:

a step of extruding the resin composition (X) according to claim 1 or 2 to obtain a mandrel, and

a step of producing a rubber hose using the mandrel obtained in the above step.

## INTERNATIONAL SEARCH REPORT

| International application No. |
|---|
| **PCT/JP2022/036094** |

**A.      CLASSIFICATION OF SUBJECT MATTER**

***B29C 33/40***(2006.01)i; ***B29C 33/76***(2006.01)i; ***B29C 48/34***(2019.01)i; ***C08L 23/14***(2006.01)i; ***C08L 23/20***(2006.01)i;
***F16L 11/04***(2006.01)i
   FI:    B29C33/40; B29C33/76; B29C48/34; C08L23/14; C08L23/20; F16L11/04

According to International Patent Classification (IPC) or to both national classification and IPC

**B.      FIELDS SEARCHED**

Minimum documentation searched (classification system followed by classification symbols)
   B29C33/40; B29C33/76; B29C48/34; C08L23/14; C08L23/20; F16L11/04

Documentation searched other than minimum documentation to the extent that such documents are included in the fields searched

   Published examined utility model applications of Japan 1922-1996
   Published unexamined utility model applications of Japan 1971-2022
   Registered utility model specifications of Japan 1996-2022
   Published registered utility model applications of Japan 1994-2022

Electronic data base consulted during the international search (name of data base and, where practicable, search terms used)


**C.      DOCUMENTS CONSIDERED TO BE RELEVANT**

| Category* | Citation of document, with indication, where appropriate, of the relevant passages | Relevant to claim No. |
|---|---|---|
| X | JP 2018-145350 A (MITSUI CHEMICALS INC.) 20 September 2018 (2018-09-20) paragraphs [0045], [0051], [0053], [0059], [0062],[0078], [0083], [0087], table 1 | 1-5 |
| A | WO 2011/055803 A1 (MITSUI CHEMICALS, INC.) 12 May 2011 (2011-05-12) entire text, all drawings | 1-5 |
| A | JP 2019-93551 A (MITSUI CHEMICALS, INC.) 20 June 2019 (2019-06-20) entire text, all drawings | 1-5 |

☐ Further documents are listed in the continuation of Box C.   ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 December 2022** | **20 December 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2022/036094**

| Patent document cited in search report | | | Publication date (day/month/year) | Patent family member(s) | | | Publication date (day/month/year) |
|---|---|---|---|---|---|---|---|
| JP | 2018-145350 | A | 20 September 2018 | (Family: none) | | | |
| WO | 2011/055803 | A1 | 12 May 2011 | US | 2012/0220728 | A1 | |
| | | | | entire text, all drawings | | | |
| | | | | US | 2017/0298160 | A1 | |
| | | | | US | 2020/0247925 | A1 | |
| | | | | US | 2022/0073659 | A1 | |
| | | | | EP | 2497789 | A1 | |
| | | | | CN | 102597027 | A | |
| | | | | KR | 10-2012-0071408 | A | |
| | | | | CN | 103588917 | A | |
| | | | | JP | 2015-52127 | A | |
| | | | | JP | 2015-52128 | A | |
| JP | 2019-93551 | A | 20 June 2019 | (Family: none) | | | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H890673 A
- JP 2000334748 A
- JP H10100161 A
- WO 0153369 A
- WO 0127124 A
- JP H3193796 A
- JP H241303 A
- WO 2011055803 A
- WO 2014050817 A
- WO 2006054613 A